# EUROPEAN PATENT SPECIFICATION

(11) **EP 4 468 747 B1**
(45) Date of publication and mention of the grant of the patent: **31.12.2025**
(21) Application number: 24174283.2
(22) Date of filing: 06.05.2024
(51) Int. Cl.: H04R 29/00, H04R 3/12, H04R 27/00

(54) **AUDIO LINK SYSTEM AND METHOD THEREOF**
AUDIOVERBINDUNGSSYSTEM UND VERFAHREN DAFÜR
SYSTÈME DE LIAISON AUDIO ET PROCÉDÉ ASSOCIÉ

(30) Priority: 17.05.2023 CN 202310560446
(43) Date of publication of application: 27.11.2024
(73) Proprietor: Harman International Industries, Inc., Stamford, Connecticut 06901 (US)
(72) Inventor: LI, Dongcheng, Shenzhen, Guangdong, 518067 (CN); YOU, Caihui, Shenzhen, Guangdong, 518067 (CN)
(74) Representative: Kraus & Lederer PartGmbB

(56) References cited:
- US-A1- 2003 035 556
- US-A1- 2006 115 101

## Description

### Technical Field

The present invention relates to the field of audio, and in particular to an audio link system based on a wired connection manner and a method used for the audio link system.

### Background

Currently, multi-functional speaker boxes for parties (for example, Partybox series speaker boxes) are becoming increasingly more popular. This type of speaker boxes can not only support music input, but also support microphone and guitar input simultaneously. In some scenarios where users use the Partybox series speaker boxes, for example, to obtain a louder volume, or to ensure that various locations in a large venue have uniform sound fields, a plurality of speaker boxes in a Party Chain mode are generally used. In the Party Chain mode, the plurality of speaker boxes may be connected in series to play the same song at the same time, thereby creating a better effect. This is especially suitable for outdoor party scenes. In addition, the speaker boxes may also be connected to microphones and guitars, and therefore, the sound of the microphones and the guitars also need to be played through the plurality of speaker boxes. Generally speaking, the delay requirement for a Guitar channel is 10 ms, and the delay requirement for a Mic channel is 30 ms. In order to obtain a better audio effect, this places high delay requirements on the speaker box system.

Currently, there are mainly two signal transmission solutions between various speaker boxes in an audio link, namely, a wireless transmission solution and a wired transmission solution.

In the wireless transmission solution, a master speaker box is usually preset, and other speaker boxes are slave speaker boxes. An audio signal of the master speaker box is transmitted to each slave speaker box separately through a wireless transmission manner such as Bluetooth (BT) or 2.4G. The master speaker box may send a control signal to each of the slave speaker boxes to perform status synchronization between the master speaker box and each of the slave speaker boxes, such as synchronization of function settings of the speaker boxes. The advantage of this wireless transmission solution is that the connection between the master speaker box and the slave speaker boxes is set relatively simply and does not require connecting cables. Therefore, no additional I/O interfaces need to be reserved on a machine. The statuses and signals between the master speaker box and the slave speaker box may be transmitted back to achieve closed-loop control, which makes it relatively easy to synchronize the function settings. However, this solution has the following disadvantages. First, the wireless transmission manner may result in an excessively long delay, which cannot meet low-delay requirements of, for example, musical instrument playing and microphone use. Second, in the wireless transmission solution, the closed-loop control needs to be implemented (that is, the status of the slave speaker box needs to be transmitted back to the master speaker box), the quantity of slave speaker boxes that can be connected to the master speaker box may be limited, otherwise it may affect the connection stability of the entire system.

The existing wired transmission solutions include the following two solutions. **In** the first wired transmission solution, various speaker boxes are connected in series one by one through cables. For example, for the first speaker box, an audio signal received via its audio input interface is transmitted through two signal transmission paths respectively. One of the signal transmission paths includes, for example, a signal processing module (DSP). The signal processing module may process the signal, which may include function setting processing (that is, performing corresponding processing according to the settings of the speaker box, such as volume adjustment and gain adjustment). The output signal is provided to a speaker of the first speaker box. The other signal transmission path refers to receiving the audio signal via the audio input interface of the first speaker box and directly outputting it to an audio input interface of the second speaker box. Specifically, the received audio signal is provided to an audio output interface of the first speaker box, and the audio output interface is connected to the audio input interface of the second speaker box via a cable. In other words, information is transmitted to the next speaker box before the function setting process is performed. In this way, all speaker boxes may be connected through cables. The advantage of the first wired transmission solution is that the delay in signal transmission between various speaker boxes is low, and therefore a plurality of speaker boxes may be connected into the system. However, the wired transmission solution has the following disadvantages. When function settings of all speaker boxes are adjusted simultaneously, the user experience may be poor. This is because in the wired transmission solution, there is no concept of master and slave speaker boxes, and therefore all the speaker boxes need to have separate function settings. If all the speaker boxes in the series link are required to have the same sound output, users need to repeatedly adjust each speaker box until a consistent effect is achieved. This is quite troublesome for the users.

In the second wired transmission solution, various speaker boxes are also connected in series one by one through cables. For example, for the first speaker box, an audio signal received via its audio input interface is transmitted through two signal transmission paths respectively. One of the signal transmission paths includes, for example, a signal processing module DSP. The signal processing module may process the signal, which may include function setting processing (similar to the function setting processing in the first wired transmission solution described above). The output signal is provided to a speaker of the first speaker box. For the other transmission path, it is different from that in the first wired transmission solution introduced above. Unlike the first wired transmission solution in which the audio signal received via the audio input interface of the first speaker box is directly provided to the audio output interface of the first speaker box, in the other transmission path, the output signal after passing through the signal processing module is provided to the audio output interface of the first speaker box, and the audio output interface is connected to the audio input interface of the second speaker box via a cable. Therefore, when the second speaker box obtains the signal, it is synchronized with function setting information or performance of the first speaker box. The second speaker box continues to pass the received signal through its own signal processing module, and then provides the processed output signal to the next speaker box. In this way, all speaker boxes may be connected through cables. The advantage of the second wired transmission solution is that it can achieve low system delay when the quantity of speaker boxes is small. However, the wired transmission solution has the following disadvantages. First, DSP chips usually have a certain delay. Therefore, when there are many speaker boxes in a series link, there is superposition of delays between the speaker boxes, because the signal output from the first speaker box has to pass through the DSP of each speaker box when the signal is transmitted in the entire audio link. In other words, the further back the speaker box is, the greater the delay is compared to the first speaker box, and there may be an obvious Haas effect. Second, in a link system using this type of connection manner, the function settings of the previous speaker box may be synchronized to all speaker boxes after the same. Therefore, in order to achieve unified adjustment of all speaker boxes, the following method must be adopted, that is, function setting can only be performed on the first speaker box, and all following speaker boxes from the second speaker box are unified with the default settings. Otherwise, any random adjustment of any speaker box starting from the second speaker box or later may affect the speaker boxes behind it.

Therefore, it is necessary to develop an improved audio link system to solve the problems of the above existing solutions.

US 2006/115101 A1 shows an audio link system. US 2003/035556 A1 shows an audio distribution system for communicating audio signals between one or more audio sources and a plurality of remote speakers.

### Summary of the Invention

One aspect of the present invention provides an audio link system. The audio link system includes a plurality of speaker boxes. The plurality of speaker boxes are capable of being connected in series in a wired manner to form an audio link. Each speaker box may include: a first audio input interface configured to receive a first audio input from an audio source; a second audio input interface configured to receive a second audio input from an upstream speaker box connected thereto; an audio output interface configured to provide an audio output to a downstream speaker box connected thereto; a first switch and a second switch; and a controller. The first switch and the second switch may respectively be configured to be capable of switching between a first connection state and a second connection state. The controller may be configured to: determine a working mode of the speaker box; and control, based on the determined working mode, the first switch and the second switch to switch to corresponding connection states respectively, so as to realize a signal transmission path corresponding to the determined working mode.

Another aspect of the present disclosure further provides a method used for an audio link system, wherein the audio link system includes a plurality of speaker boxes connected in series in a wired manner. Each speaker box includes a first audio input interface, a second audio input interface, an audio output interface, a first switch, a second switch, and a controller. The method includes: determining a working mode of each speaker box by a controller of each speaker box; and controlling, by the controller of each speaker box, the first switch and the second switch of each speaker box to respectively switch to corresponding connection states based on the determined working mode, so as to realize a signal transmission path corresponding to the determined working mode between the first audio input interface or the second audio input interface and the audio output interface of each speaker box.

### Description of the Drawings

The system may be better understood by reference to the following description with reference to the accompanying drawings. The parts in the figures are not necessarily to scale, but the focus is placed on explaining the principle of the present invention. In addition, in the figures, similar or identical reference numerals refer to similar or identical elements.
FIG. 1 is a schematic diagram showing a working principle of each speaker box applicable in an audio link system according to one or more embodiments of the present disclosure.
FIG. 2 is an example block diagram of a single speaker box according to one or more embodiments, wherein both switches are in a non-connected state.
FIG. 3 is an example block diagram of a master speaker box in a master speaker box working mode according to one or more embodiments, wherein both switches are in a first connection state.
FIG. 4 is an example block diagram of a slave speaker box in a slave speaker box working mode according to one or more embodiments, wherein both switches are in a second connection state.
FIG. 5 is a schematic link connection diagram of an audio link system including a plurality of speaker boxes.

### Detailed Description

It should be understood that the following description of the embodiments is given for illustrative purposes only, and not restrictive. The division of examples in the functional blocks, modules, or units shown in the drawings should not be construed as representing these functional blocks, modules, or units must be implemented as physically separated units. The functional blocks, modules, or units shown or described may be implemented as separate units, circuits, chips, functions, modules, or circuit elements. One or more functional blocks or units may also be implemented in a common circuit, chip, circuit element, or unit.

The use of singular terms (for example, but not limited to "a(n)") is not intended to limit the number of items. The use of relational terms such as, but not limited to, "top", "bottom", "left", "right", "upper", "lower", "downward", "upward", "side", "first", "second" ("third", and the like), "entrance", "exit", and the like shall be used in writing for the purpose of clarity in the reference to the Appended Drawings and not for the purpose of limiting the scope of the claims disclosed or enclosed in the present disclosure, unless otherwise stated. The terms "include" and "such as" are descriptive rather than restrictive, and unless otherwise stated, the term "may" means "can, but not necessarily". Notwithstanding any other language used in the present disclosure, the embodiments illustrated in the drawings are examples given for purposes of illustration and explanation and are not the only embodiments of the subject matter herein.

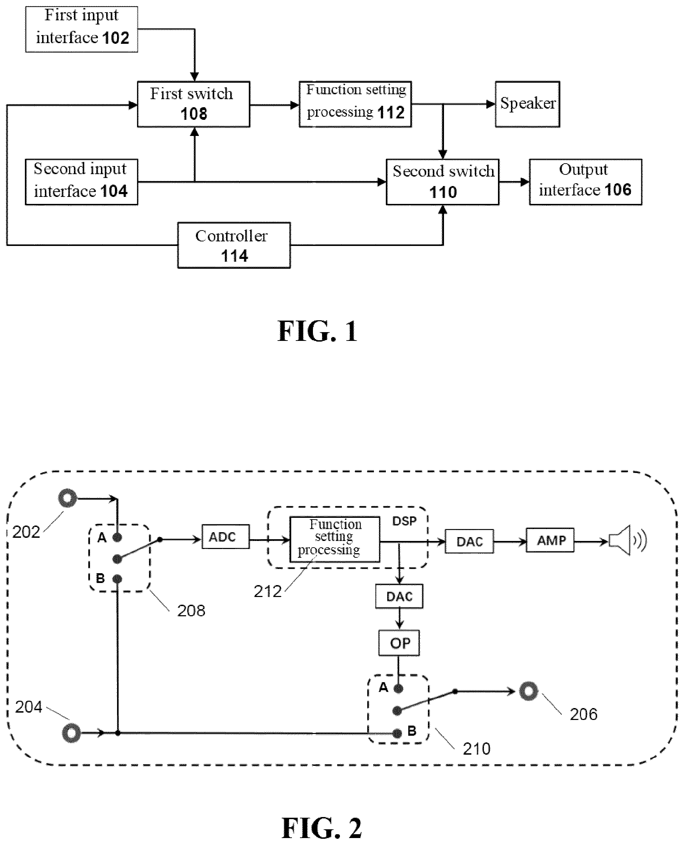

The present disclosure aims to provide a technical solution for connecting a plurality of speaker boxes in series one by one into an audio link system based on a wired connection manner. The technical solution of the audio link system according to one or more embodiments of the present disclosure may enable each speaker box in the audio link system to automatically determine whether it is in a master speaker box working mode or a slave speaker box working mode, and automatically control an internal switch circuit to switch to a corresponding mode according to the determination result, so that a signal input to each speaker box is capable of adopting a corresponding transmission path corresponding to the working mode of each speaker box, thereby completing the transmission of the signal in the entire audio link of the audio link system. Therefore, the audio link system solution provided by the present disclosure can achieve a shorter delay in the audio link to meet the extremely low delay required for musical instrument performance or microphone speaking. Specifically, the audio link system solution of the present disclosure makes the signal delay between a master speaker box and a slave speaker box very short, and there is almost no delay difference between all the slave speaker boxes. The audio link system solution of the present disclosure can greatly reduce the delay of the audio link, and therefore, more speaker boxes can be connected to the audio link system. For example, in theory, an unlimited number of slave speaker boxes may be connected, and there is no delay superposition between the slave speaker boxes, thereby avoiding the Haas effect. In addition, the audio link system solution of the present disclosure can also significantly simplify function setting operations of various speaker boxes in the audio link, thereby greatly improving a user's experience of using the speaker box system while meeting the user's usage requirements. For example, the slave speaker box may automatically synchronize function settings or adjustments of the master speaker box, and the function settings and adjustments between the slave speaker boxes are independent of each other. The audio link system solution proposed in the present disclosure is described in detail below with reference to FIG. 1 to FIG. 5.

FIG. 1 is a schematic diagram showing a working principle of each speaker box in an audio link system according to one or more embodiments of the present disclosure. As shown in FIG. 1, the speaker box may include three interfaces, namely, a first input interface 102, a second input interface 104, and an output interface 106. The first input interface 102 and the second input interface 104 may be used for audio input, and the output interface 106 may be used for audio output.

Specifically, the first input interface 102 may be an audio input interface (may also be referred to as a first audio input interface) that is connected to an audio source in a wired or wireless manner and receives an audio input from an audio source. It should be noted that in the reference to the term "first input interface" or "first audio input interface" herein, the "interface" may be broadly understood as an input source for receiving an audio input in a wired or wireless manner. For example, it may refer to a physical port (used for receiving the audio input during wired connection) on the speaker box, or it may refer to any receiver, receiving device, and the like that can receive the audio input in a wireless manner. The audio source may include any external device that can provide an audio input, such as a music player, a smartphone, a tablet, a microphone, and musical instrument such as a guitar. The external device may be connected to the first input interface 102 in a wired or wireless manner.

The second input interface 104 (also referred to as a second audio input interface or a "Party Chain Aux in" interface) may be connected to an upstream speaker box in the audio link in a wired manner, and may receive an output signal from the upstream speaker box. It should be noted that the previous speaker box (that is, in the upstream direction) adjacent to the current speaker box in the audio link may be referred to as the upstream speaker box relative to the current speaker box. Likewise, it is understandable that the next speaker box (that is, in the downstream direction) adjacent to the current speaker box in the audio link may be referred to as the downstream speaker box relative to the current speaker box.

The output interface 106 (also referred to as an audio output interface or "Party Chain Aux out") may be used to be connected to the downstream speaker box of the current speaker box in a wired manner, and output an audio signal to the downstream speaker box. In other words, the second input interface in each speaker box may be connected to the output interface of the upstream speaker box of each speaker box through a cable, and the output interface in each speaker box may be connected to the second input interface of the downstream speaker box of each speaker box through a cable.

The speaker box may further include a first switch 108 and a second switch 110. Each of the first switch 108 and the second switch 110 can switch between two connection states. By controlling the first switch 108 and the second switch 110 to work in different connection states, different signal transmission paths may be provided for the audio signal input to the speaker box via the first input interface 102 or the second input interface 104.

The switching of the first switch 108 and the second switch 110 may be controlled by the controller 114. The controller 114 may be a microcontroller unit (MCU) arranged in the speaker box. In some embodiments, the controller 114 may determine a working mode of the speaker box, and control the first switch 108 and the second switch 110 to be in different connection states based on the determined working mode.

It is understandable that in the field of I/O interfaces, there are many methods for determining, by software, hardware, or a combination of both, whether an interface is connected to a cable, and these methods are all applicable to the solutions disclosed herein. For example, testing is performed on a specific pin or contact in an interface. If there is a cable connected, the pin or contact may be conducted due to the connection of the cable, thereby generating a detection signal (such as a voltage signal). The detection signal is provided to the controller. The controller may determine, based on whether a detection signal is received, whether there is a cable connected to the interface.

In some embodiments, the controller 114 may determine, based on receiving a detection signal indicating that there is a cable connected to the second input interface, that the speaker box will work in the slave speaker box working mode, that is, determine that the speaker box will be connected in the audio link as a slave speaker box. In the determination process of the controller, the second input interface 104 has a higher priority than the first input interface 102. In other words, as long as it is detected that there is a cable connected to the second input interface 104, all input sources from the first input interface 102 may be considered to be completely turned off. That is, as long as the controller detects that there is a cable connected to the second input interface 104, the controller may determine the speaker box as a slave speaker box regardless of whether there is input at the first input interface 102. In addition (that is, the controller 114 does not receive a detection signal indicating that there is a cable connected to the second input interface 104), the controller 114 may determine that the speaker box will work in the master speaker box working mode, that is, the speaker box will be connected in the audio link as a master speaker box.

In addition, the speaker box further includes a function setting processing module 112. The function setting processing module 112 may be implemented, for example, in a signal processor (DSP). The function setting processing module 112 may perform corresponding processing on the audio signal according to preset or received function setting information of the speaker box (such as, volume setting information and sound effect setting information), so that the audio signal after passing through the function setting processing module can be loaded with the function setting information. In some examples, the function setting information may be setting information preset in the speaker box, or setting information received based on a setting operation of a user on the speaker box when the speaker box is in use, or setting information extracted from a signal from an upstream speaker box.

In the solution of the present disclosure, for the master speaker box in the audio link, its function setting information may be synchronized to all the slave speaker boxes in the audio link. In other words, any setting changes made on the master speaker box may be automatically synchronized to all the slave speaker boxes in the audio link, which can facilitate adjustment operations of the user. As for the slave speaker box in the system link, any additional adjustments to the function settings on it can only take effect on itself and may not affect other speaker boxes in the system link. This is because the controller controls the switching operations of the first and second switches according to the working mode of the speaker box, so that different working modes are achieved by different signal transmission paths.

In some embodiments, when the controller 114 determines that the working mode of the speaker box is the master speaker box working mode (i.e., the speaker box is the master speaker box), the first switch 108 and the second switch 110 are controlled to switch to the first connection state, so that the first audio input received via the first input interface 102 is provided to the output interface 106 through the first signal transmission path. The first transmission path may include the first switch 108, the function setting processing module 112, and the second switch 110. The audio signal after passing through the function setting processing module 112 has been loaded with the function setting information of the master speaker box, and therefore, when the audio signal is provided, through the second switch 110 via the output interface 106, to the next speaker box connected to the current master speaker box in a wired manner, the function setting information related to the master speaker box is synchronized to the next slave speaker box connected to the master speaker box in the link system.

In some embodiments, when the controller 114 determines that the working mode of the speaker box is the slave speaker box working mode (i.e., the speaker box is the slave speaker box), the first switch 108 and the second switch 110 are controlled to switch to the second connection state, so that the second audio input received via the second input interface 104 is provided to the audio output interface 106 through the second signal transmission path. The second signal transmission path includes the second switch 110. This means that the second audio input received via the second input interface 104 may pass through the second switch 110 without any delay and be transmitted via the output interface to the next speaker box connected to the current speaker box in a wired manner. At this time, since the first switch 108 and the second switch 110 have been switched to the second connection state, the first transmission path is disconnected. Further explanation is made below with reference to FIG. 2 to FIG. 5.

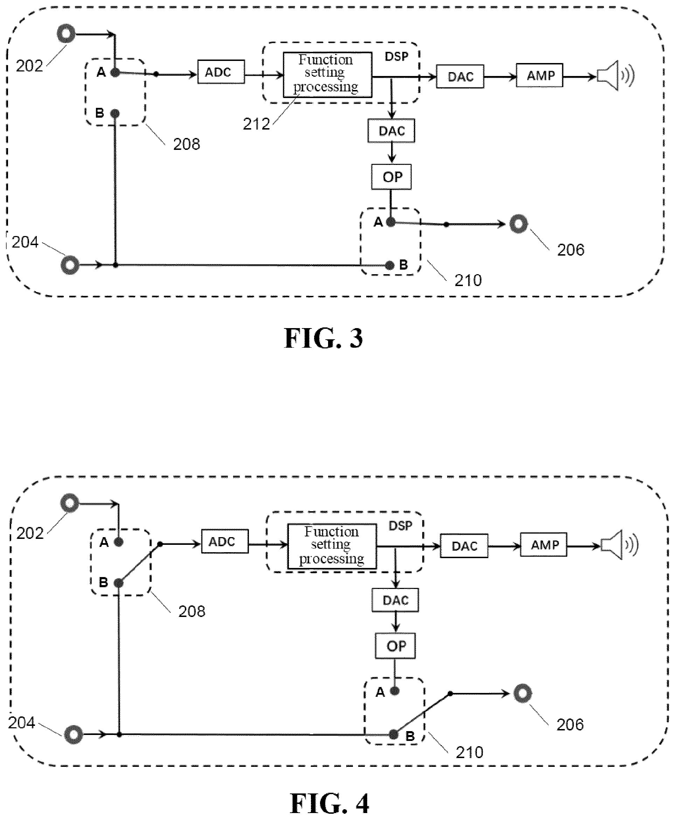

FIG. 2 is an example block diagram of a single speaker box according to one or more embodiments, wherein both switches are in a non-connected state. FIG. 3 is an example block diagram of a speaker box in a master speaker box working mode according to one or more embodiments, wherein both switches are in a first connection state. FIG. 4 is an example block diagram of a speaker box in a slave speaker box working mode according to one or more embodiments, wherein both switches are in a second connection state.

As shown in FIG. 2 to FIG. 4, the speaker box includes a first input interface 202, a second input interface 204, an output interface 206, a first switch 208, a second switch 210, and a function setting processing module 212 included in a DSP. For the working principles of these components, reference may be made to the first input interface 102, the second input interface 104, the output interface 106, the first switch 108, the second switch 110, and the function setting processing module 112 described with reference to FIG. 1. The description may not be repeated here.

For the sake of brevity, the controller is not shown in FIG.2 to FIG. 4. Based on the above description of FIG. 1, technicians in the art may understand that the technical solution in FIG. 2 to FIG. 4 still includes a controller. For example, it may be implemented in an MCU of the speaker box, and the controller may jointly implement the solution of the present disclosure with the components shown in FIG. 2 to FIG. 4. In addition, FIG. 2 to FIG. 4 further show a digital-to-analog conversion module (ADC), an analog-to-digital conversion module (DAC), and an operational amplifier module (OP). These modules are commonly used modules in a circuit system, and their detailed working principles are not repeated here. These modules are shown in the figures as an example only for the purpose of intuitive explanation, and are not intended to further limit the innovative solutions of the present disclosure.

Referring to FIG. 2 to FIG. 4, the first switch 202 and the second switch 204 may be bidirectional switches, such as single-pole double-throw switches (SPDT). Each switch includes a movable end and two fixed ends A and B. In FIG. 2, the first switch 202 and the second switch 204 are both in a disconnected state. It may be understood by those skilled in the art that, in the solution of the present disclosure, any suitable switch capable of switching the connection state may be adopted according to the specific design.

When the speaker box is determined to be the master speaker box, the first switch 208 is controlled to connect its own movable end to its fixed end A, and at the same time, the second switch 208 is controlled to connect its own movable end to its fixed end A as well. At this time, both the first switch 208 and the second switch 210 are switched to the first connection state. At this moment, the connection relationship of the various components of the master speaker box is shown in FIG. 3. In the master speaker box mode, the first audio input received via the first input interface 202 is provided to the output interface 206 through the first signal transmission path. In an example master speaker box mode shown in FIG. 3, the first transmission path may include the first switch 208, the function setting processing module 212, and the second switch 210. The first transmission path may further include an ADC connected between the first switch 208 and the function setting processing module 212, and a DAC and an OP connected in series between the function setting processing module 212 and the second switch 210. It is understandable that in a practical circuit structure, there may be more functional units and devices. In the first transmission path, the audio signal after passing through the function setting processing module 212 has been loaded with the function setting information of the master speaker box (that is, the signal output by the function setting processing module 212 is an audio signal obtained after the received audio signal has been processed accordingly according to the function setting), and therefore, when the audio signal is provided, through the second switch 210 via the output interface 206, to the next speaker box connected to the current master speaker box in a wired manner, the function setting information related to the master speaker box is synchronized to the next speaker box (that is, the first slave speaker box) connected to the master speaker box in the link system. For example, the first slave speaker box may extract the corresponding function setting information from the received signal. In addition, it may be seen from FIG. 3 that the audio signal processed by the function setting processing module 212 is further provided to a speaker of the master speaker box via the DAC and a power amplifier (AMP) for playback.

When the speaker box is determined to be the slave speaker box, the first switch 208 is controlled to connect its own movable end to its fixed end B, and at the same time, the second switch 210 is controlled to connect its own movable end to its fixed end B. At this time, both the first switch 208 and the second switch 210 are switched to the second connection state. At this point, the connection relationship of the various components of the master speaker box is shown in FIG. 4. In the slave speaker box mode, the second audio input received via the second input interface 204 is provided to the output interface 206 through the second signal transmission path. In the example shown in FIG. 4, the second transmission path only includes the second switch 210. In other words, relative to the next speaker box, this speaker box only plays the role of a relay connection, which is used for outputting the signal received from the second input interface via the output interface. This means that the second audio input received via the second input interface 204 may pass through the second switch 210 and then transmitted via the output interface 206 to the next speaker box connected to the current slave speaker box in a wired manner, without causing any additional delay. In addition, as can be seen from FIG. 4, the second audio input received via the second input interface 204 is further provided to a speaker of the slave speaker box through the first switch 208, the ADC, the function setting processing module 212, the DAC, and the power amplifier for playback output. However, the signal output by the function setting processing module 212 may no longer be able to be transmitted to the next speaker box because the second interface 210 has been switched from the first connection state to the second connection state (that is, the movable end of the switch is disconnected from the end A and connected to the end B).

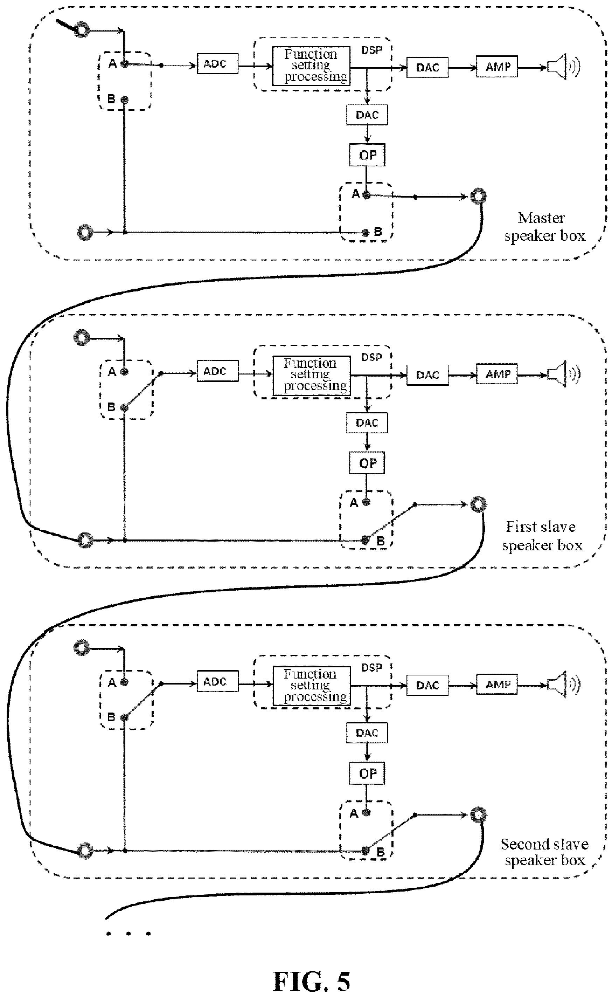

FIG. 5 is a schematic diagram showing an audio link system formed by connecting a plurality of speaker boxes in sequence in accordance with the above working principle. Combined with the above introduction of the component connections and working principles of each speaker box, it is understandable that an audio signal output from an audio output interface of a master speaker box is transmitted to a first slave speaker box via a cable, and the audio output is loaded with function setting information of the master speaker box. After the first slave speaker box receives the audio signal via its second input interface, the audio signal is transmitted to its own function setting module via a first switch of the first slave speaker box, and therefore, the function setting information of the master speaker box is synchronized to the first slave speaker box. At the same time, the first slave speaker box transmits the audio signal received via its second input interface to the second slave speaker box through its own second switch via the audio output interface. The working principle of the second slave speaker box is the same as that of the first slave speaker box. In this way, the function setting information from the master speaker box may be synchronized to all the slave speaker boxes in the audio link. As may be seen from FIG. 5, the second switch of each slave speaker box is connected to the fixed end B, and therefore, the signal output by the function setting processing module of each slave speaker box is only provided to the speaker of each speaker box and may not be transmitted to the next speaker box. In other words, any additional adjustments related to the function settings performed on the slave speaker box can only take effect on itself and may not affect other speaker boxes in the system link.

In some examples, in the audio link system, if certain settings or adjustments are made on the master speaker box, the audio signal may be processed accordingly in the function setting module of the master speaker box (for example, parameters or features of the audio signal, such as the audio frequency band, loudness, and signal-to-noise ratio, are adjusted accordingly). For example, if the volume is set on the master speaker box, the audio signal may be processed in the function setting module of the master speaker box (for example, a loudness parameter of the audio signal is adjusted), and the processed audio signal is equivalent to loaded with the volume setting information. The slave speaker box may obtain the volume setting information on the master speaker box from the received audio signal through its own function setting processing module, and synchronize the setting information to this slave speaker box, so that the volume of the audio played on this slave speaker box is consistent with the volume set on the master speaker box. In this way, all the slave speaker boxes may synchronize the setting information in a similar manner. That is, the setting information on the master speaker box may be synchronized to all the slave speaker boxes. If a user also makes special adjustments on a certain slave speaker box at this time, for example, if he/she intends to increase the volume of the audio output on a certain slave speaker box, only the output volume of the slave speaker box itself may increase, and these adjustments may not affect other speaker boxes in the audio link. This is because the signal output from the function setting processing module of each slave speaker box can only be provided to the speaker of the slave speaker box itself, and may not be transmitted to the next speaker box via the output interface.

In addition, as shown in the audio link system of FIG. 5, the signal delay between the audio playback of the master speaker box and each slave speaker box may be very short (for example, there is only a difference of one DSP processing time, and the delay may be reduced to 1 ms or even less), and there is almost no delay difference between all slave speaker boxes. Therefore, even if more speaker boxes are connected to the audio link system, there may be no delay superposition. As a result, the auditory experience of the user is greatly improved.

Another aspect of the present disclosure further provides a method used for the above audio link system. The method may include: determining a working mode of each speaker box by a controller of each speaker box; and controlling, by the controller of each speaker box, the first switch and the second switch of each speaker box to respectively switch to corresponding connection states based on the determined working mode, so as to realize a signal transmission path corresponding to the determined working mode between the first audio input interface or the second audio input interface and the audio output interface of each speaker box. In some embodiments, the method may further include: controlling, in response to a determination that the working mode of the speaker box is the master speaker box working mode, the first switch and the second switch to both switch to a first connection state, so that the first audio input received via the first audio input interface is provided to the audio output interface through a first signal transmission path, wherein the first transmission path includes the first switch, the function setting processing module, and the second switch. In some embodiments, the method may further include: controlling, in response to a determination that the working mode of the speaker box is the slave speaker box working mode, the first switch and the second switch to both switch to a second connection state, so that the second audio input received via the second audio input interface is provided to the audio output interface through a second signal transmission path, wherein the second signal transmission path includes the second switch. In some embodiments, the method may further include: further transmitting, through a third signal transmission path, the second audio input received via the second audio input interface, thereby synchronizing function setting information of the speaker box working in the master speaker box working mode to the speaker box working in the slave speaker box working mode. The third transmission path includes the first switch and the function setting processing module. In some embodiments, the method may further include: determining the working mode of the speaker box based on whether a detection signal is received, wherein the detection signal indicates that there is a cable connected to the second audio input interface. In some embodiments, the method may further include: determining, in response to receiving the detection signal, that the working mode of the speaker box is the slave speaker box working mode; otherwise, determining that the working mode of the speaker box is the master speaker box working mode.

Any one or more of the processor, memory, or system described herein includes computer-executable instructions, and the computer-executable instructions may be compiled or interpreted from computer programs created using various programming languages and/or technologies. Generally speaking, a processor (such as a microprocessor) receives and executes instructions, for example, from a memory, a computer-readable medium, and the like. The processor includes a non-transitory computer-readable storage medium capable of executing instructions of a software program. The computer-readable medium may be, but is not limited to, an electronic storage device, a magnetic storage device, an optical storage device, an electromagnetic storage device, a semiconductor storage device, or any suitable combination thereof.

The description of the embodiments has been presented for the purposes of illustration and description. Appropriate modifications and changes of the embodiments can be implemented in view of the above description or can be obtained through practical methods. For example, unless otherwise indicated, one or more of the methods described may be performed by a combination of suitable devices and/or systems. The method can be performed in the following manner: using one or more logic devices (for example, processors) in combination with one or more additional hardware elements (such as storage devices, memories, circuits, hardware network interfaces, etc.) to perform stored instructions. The method and associated actions can also be executed in parallel and/or simultaneously in various orders other than the order described in this application. The system is illustrative in nature, and may include additional elements and/or omit elements.

As used in the present application, an element or step listed in the singular form and preceded by the word "a(n)/one" should be understood as not excluding a plurality of the elements or steps, unless such exclusion is indicated. Furthermore, references to "an embodiment" or "an example" of the present invention are not intended to be interpreted as excluding the existence of additional embodiments that also incorporate the recited features. The present invention has been described above with reference to specific embodiments. However, those of ordinary skill in the art will appreciate that various modifications and changes may be made within the scope of the present invention as set forth in the appended claims.

## Claims

1. An audio link system, comprising a plurality of speaker boxes, the plurality of speaker boxes being capable of being connected in series in a wired manner, wherein each speaker box comprises:
a first audio input interface (102) configured to receive a first audio input from an audio source;
a second audio input interface (104) configured to receive a second audio input from an upstream speaker box connected thereto;
an audio output interface (106) configured to provide audio output to a downstream speaker box connected thereto;
a first switch (108) and a second switch (110) respectively configured to be capable of switching between a first connection state and a second connection state; and
a controller (114) configured to:
determine a working mode of the speaker box; and
control, based on the determined working mode, the first switch and the second switch to switch to corresponding connection states respectively, so as to realize a signal transmission path corresponding to the determined working mode.

2. The audio link system according to claim 1, wherein the working mode comprises a master speaker box working mode and a slave speaker box working mode.

3. The audio link system according to claim 2, further comprising a function setting processing module (112), which is configured to process the first audio input or the second audio input according to preset or received function setting information associated with the speaker box, so that a signal output from the function setting processing module has been loaded with the function setting information.

4. The audio link system according to claim 3, wherein the controller is further configured to:
control, in response to a determination that the working mode of the speaker box is the master speaker box working mode, the first switch and the second switch to both switch to the first connection state, so that the first audio input received via the first audio input interface is provided to the audio output interface through a first signal transmission path, wherein the first transmission path comprises the first switch, the function setting processing module, and the second switch.

5. The audio link system according to claim 3 or 4, wherein the controller is further configured to:
control, in response to a determination that the working mode of the speaker box is the slave speaker box working mode, the first switch and the second switch to both switch to the second connection state, so that the second audio input received via the second audio input interface is provided to the audio output interface through a second signal transmission path, wherein the second signal transmission path comprises the second switch.

6. The audio link system according to claim 5, wherein the second audio input received via the second audio input interface is further transmitted through a third signal transmission path, thereby synchronizing function setting information associated with the speaker box working in the master speaker box working mode to the speaker box working in the slave speaker box working mode, and the third transmission path comprises the first switch and the function setting processing module.

7. The audio link system according to any preceding claim, wherein the controller is further configured to determine the working mode of the speaker box based on whether a detection signal is received, wherein the detection signal indicates that there is a cable connected to the second audio input interface.

8. The audio link system according to claim 7, wherein the controller is further configured to:
determine, in response to receiving the detection signal, that the working mode of the speaker box is the slave speaker box working mode; and
determine, in response to not receiving the detection signal, that the working mode of the speaker box is the master speaker box working mode.

9. The audio link system according to any preceding claim, wherein the controller is a microcontroller unit (MCU).

10. A method used for an audio link system, wherein the audio link system comprises a plurality of speaker boxes connected in series in a wired manner, each speaker box comprises a first audio input interface (102), a second audio input interface (104), an audio output interface (106), a first switch (108), a second switch (110), and a controller (114), the method comprising:
determining a working mode of each speaker box by a controller of each speaker box; and
controlling, by the controller of each speaker box, the first switch and the second switch of each speaker box to respectively switch to corresponding connection states based on the determined working mode, so as to realize a signal transmission path corresponding to the determined working mode between the first audio input interface or the second audio input interface and the audio output interface of each speaker box.

## Patentansprüche

1. Audioverbindungssystem, umfassend eine Vielzahl von Lautsprecherboxen, wobei die Vielzahl von Lautsprecherboxen in der Lage ist, in einer verdrahteten Weise in Reihe geschaltet zu sein, wobei jede Lautsprecherbox Folgendes umfasst:
eine erste Audioeingangsschnittstelle (102), die konfiguriert ist, um ein erstes Audiosignal von einer Audioquelle zu empfangen;
eine zweite Audioeingangsschnittstelle (104), die konfiguriert ist, um ein zweites Audiosignal von einer damit verbundenen vorgelagerten Lautsprecherbox zu empfangen;
eine Audioausgangsschnittstelle (106), die konfiguriert ist, um einer nachgeschalteten Lautsprecherbox einen Audioausgang bereitzustellen;
einen ersten Schalter (108) und einen zweiten Schalter (110), die jeweils konfiguriert sind, um in der Lage zu sein, zwischen einem ersten Verbindungszustand und einem zweiten Verbindungszustand umzuschalten; und
eine Steuerung (114), die konfiguriert ist, um:
einen Arbeitsmodus der Lautsprecherbox zu bestimmen; und
den ersten und den zweiten Schalter basierend auf dem bestimmten Arbeitsmodus zu steuern, um jeweils in entsprechende Verbindungszustände umzuschalten, um einen dem bestimmten Arbeitsmodus entsprechenden Signalübertragungsweg zu realisieren.

2. Audioverbindungssystem nach Anspruch 1, wobei der Arbeitsmodus einen Master-Lautsprecherbox-Arbeitsmodus und einen Slave-Lautsprecherbox-Arbeitsmodus umfasst.

3. Audioverbindungssystem nach Anspruch 2, ferner umfassend ein Funktionseinstellungsverarbeitungsmodul (112),
das konfiguriert ist, um den ersten Audioeingang oder den zweiten Audioeingang gemäß voreingestellten oder empfangenen Funktionseinstellungsinformationen, die mit der Lautsprecherbox verknüpft sind, zu verarbeiten, sodass ein Signalausgang des Funktionseinstellungsverarbeitungsmoduls mit den Funktionseinstellungsinformationen geladen wurde.

4. Audioverbindungssystem nach Anspruch 3, wobei die Steuerung ferner konfiguriert ist, um:
als Reaktion auf eine Bestimmung, dass der Arbeitsmodus der Lautsprecherbox der Master-Lautsprecherbox-Arbeitsmodus ist, den ersten Schalter und den zweiten Schalter zu steuern, um beide in den ersten Verbindungszustand umzuschalten, sodass der Audioausgangsschnittstelle die über die erste Audioeingangsschnittstelle erste empfangene Audioeingabe über einen ersten Signalübertragungsweg bereitgestellt wird, wobei der erste Übertragungsweg den ersten Schalter, das Funktionseinstellungsverarbeitungsmodul und den zweiten Schalter umfasst.

5. Audioverbindungssystem nach Anspruch 3 oder 4, wobei die Steuerung ferner konfiguriert ist, um:
als Reaktion auf eine Bestimmung, dass der Arbeitsmodus der Lautsprecherbox der Slave-Lautsprecherbox-Arbeitsmodus ist, den ersten Schalter und den zweiten Schalter zu steuern, um beide in den zweiten Verbindungszustand umzuschalten, sodass der Audioausgangsschnittstelle die über die zweite Audioeingangsschnittstelle empfangene zweite Audioeingabe über einen zweiten Signalübertragungsweg bereitgestellt wird, wobei der zweite Signalübertragungsweg den zweiten Schalter umfasst.

6. Audioverbindungssystem nach Anspruch 5, wobei das über die zweite Audioeingangsschnittstelle empfangene zweite Audiosignal ferner über einen dritten Signalübertragungsweg übertragen wird, wodurch Funktionseinstellungsinformationen, die mit der in dem Master-Lautsprecherbox-Arbeitsmodus arbeitenden Lautsprecherbox verknüpft sind, mit der in dem Slave-Lautsprecherbox-Arbeitsmodus arbeitenden Lautsprecherbox synchronisiert werden, und der dritte Übertragungsweg den ersten Schalter und das Funktionseinstellungsverarbeitungsmodul umfasst.

7. Audioverbindungssystem nach einem der vorhergehenden Ansprüche, wobei die Steuerung ferner konfiguriert ist, um den Arbeitsmodus der Lautsprecherbox basierend darauf zu bestimmen, ob ein Erkennungssignal empfangen wird, wobei das Erkennungssignal anzeigt, dass ein Kabel mit der zweiten Audioeingangsschnittstelle verbunden ist.

8. Audioverbindungssystem nach Anspruch 7, wobei die Steuerung ferner konfiguriert ist, um:
als Reaktion auf das Empfangen des Erkennungssignals zu bestimmen, dass der Arbeitsmodus der Lautsprecherbox der Slave-Lautsprecherbox-Arbeitsmodus ist; und
als Reaktion auf das Nicht-Empfangen des Erkennungssignals zu bestimmen, dass der Arbeitsmodus der Lautsprecherbox der Master-Lautsprecherbox-Arbeitsmodus ist.

9. Audioverbindungssystem nach einem der vorhergehenden Ansprüche, wobei die Steuerung eine Mikrosteuerungseinheit (MCU) ist.

10. Verfahren, das für ein Audioverbindungssystem verwendet wird, wobei das Audioverbindungssystem eine Vielzahl von in einer verdrahteten Weise in Reihe geschalteten Lautsprecherboxen umfasst, wobei jede Lautsprecherbox eine erste Audioeingangsschnittstelle (102), eine zweite Audioeingangsschnittstelle (104), eine Audioausgangsschnittstelle (106), einen ersten Schalter (108), einen zweiten Schalter (110) und eine Steuerung (114) umfasst, wobei das Verfahren Folgendes umfasst:
Bestimmen eines Arbeitsmodus jeder Lautsprecherbox durch eine Steuerung jeder Lautsprecherbox; und
Steuern des ersten Schalters und des zweiten Schalters jeder Lautsprecherbox durch die Steuerung jeder Lautsprecherbox, um basierend auf dem bestimmten Arbeitsmodus jeweils in entsprechende Verbindungszustände umzuschalten, um einen dem bestimmten Arbeitsmodus entsprechenden Signalübertragungsweg zwischen der ersten Audioeingangsschnittstelle oder der zweiten Audioeingangsschnittstelle und der Audioausgangsschnittstelle jeder Lautsprecherbox zu realisieren.

## Revendications

1. Système de liaison audio comprenant une pluralité de boîtiers de haut-parleurs, la pluralité de boîtiers de haut-parleurs pouvant être connectés en série par câble, dans lequel chaque boîtier de haut-parleur comprend :
une première interface d'entrée audio (102) configurée pour recevoir une première entrée audio provenant d'une source audio ;
une seconde interface d'entrée audio (104) configurée pour recevoir une seconde entrée audio provenant d'un boîtier de haut-parleur en amont connecté à celle-ci ;
une interface de sortie audio (106) configurée pour fournir une sortie audio à un boîtier de haut-parleur en aval connecté à celle-ci ;
un premier commutateur (108) et un second commutateur (110) configurés respectivement pour être capables de commuter entre un premier état de connexion et un second état de connexion ; et
un dispositif de commande (114) configuré pour :
déterminer un mode de fonctionnement du boîtier de haut-parleur ; et
commander, sur la base du mode de fonctionnement déterminé, le premier commutateur et le second commutateur vers des états de connexion correspondants, afin de réaliser un chemin de transmission de signal correspondant au mode de fonctionnement déterminé.

2. Système de liaison audio selon la revendication 1, dans lequel le mode de fonctionnement comprend un mode de fonctionnement de boîtier de haut-parleur maître et un mode de fonctionnement de boîtier de haut-parleur esclave.

3. Système de liaison audio selon la revendication 2, comprenant également un module de traitement de réglage de fonction (112), qui est configuré pour traiter la première entrée audio ou la seconde entrée audio selon les informations de réglage de fonction prédéfinies ou reçues associées au boîtier de haut-parleur, de sorte qu'un signal de sortie du module de traitement de réglage de fonction ait été chargé avec les informations de réglage de fonction.

4. Système de liaison audio selon la revendication 3, dans lequel le dispositif de commande est également configuré pour : commander, en réponse à la détermination que le mode de fonctionnement du boîtier de haut-parleur est le mode de fonctionnement du boîtier de haut-parleur maître, le premier commutateur et le second commutateur commutent tous deux sur le premier état de connexion, de sorte que la première entrée audio reçue par le biais de la première interface d'entrée audio est fournie à l'interface de sortie audio par le biais d'un premier chemin de transmission de signal, dans lequel le premier chemin de transmission comprend le premier commutateur, le module de traitement de réglage de fonction et le second commutateur.

5. Système de liaison audio selon la revendication 3 ou 4, dans lequel le dispositif de commande est également configuré pour : commander, en réponse à la détermination que le mode de fonctionnement du boîtier de haut-parleur est le mode de fonctionnement du boîtier de haut-parleur esclave, le premier commutateur et le second commutateur commutent tous deux sur le second état de connexion, de sorte que la seconde entrée audio reçue par le biais de la seconde interface d'entrée audio est fournie à l'interface de sortie audio par le biais d'un deuxième chemin de transmission de signal, dans lequel deuxième chemin de transmission de signal comprend le second commutateur.

6. Système de liaison audio selon la revendication 5, dans lequel la seconde entrée audio reçue par le biais de la seconde interface d'entrée audio est également transmise par un troisième chemin de transmission de signal, synchronisant ainsi les informations de réglage de fonction associées au boîtier de haut-parleur fonctionnant en mode de fonctionnement du boîtier de haut-parleur maître avec le boîtier de haut-parleur fonctionnant en mode de fonctionnement du boîtier de haut-parleur esclave, et le troisième chemin de transmission comprend le premier commutateur et le module de traitement de réglage de fonction.

7. Système de liaison audio selon une quelconque revendication précédente, dans lequel le dispositif de commande est également configuré pour déterminer le mode de fonctionnement du boîtier de haut-parleur sur la base de la réception d'un signal de détection, dans lequel le signal de détection indique la présence d'un câble connecté à la seconde interface d'entrée audio.

8. Système de liaison audio selon la revendication 7, dans lequel le dispositif de commande est également configuré pour : déterminer, en réponse à la réception du signal de détection, que le mode de fonctionnement du boîtier de haut-parleur est le mode de fonctionnement du boîtier de haut-parleur esclave ; et déterminer, en réponse à la non réception du signal de détection, que le mode de fonctionnement du boîtier de haut-parleur est le mode de fonctionnement du boîtier de haut-parleur maître.

9. Système de liaison audio selon une quelconque revendication précédente, dans lequel le dispositif de commande est une unité de microdispositif de commande (MCU).

10. Procédé utilisé pour un système de liaison audio, dans lequel le système de liaison audio comprend une pluralité de boîtiers de haut-parleurs connectés en série par câble, chaque boîtier de haut-parleur comprend une première interface d'entrée audio (102), une seconde interface d'entrée audio (104), une interface de sortie audio (106), un premier commutateur (108), un second commutateur (110) et un dispositif de commande (114), le procédé comprenant :
la détermination d'un mode de fonctionnement de chaque boîtier de haut-parleur par un dispositif de commande de chaque boîtier de haut-parleur ; et
la commande, par le dispositif de commande de chaque boîtier de haut-parleur, du premier commutateur et du second commutateur de chaque boîtier de haut-parleur pour commuter respectivement vers les états de connexion correspondants sur la base du mode de fonctionnement déterminé, afin de réaliser un chemin de transmission de signal correspondant au mode de fonctionnement déterminé entre la première interface d'entrée audio ou la seconde interface d'entrée audio et l'interface de sortie audio de chaque boîtier de haut-parleur.
